# EUROPEAN PATENT APPLICATION

(11) **EP 4 804 485 A1**
(43) Date of publication of application: **09.09.2026**
(21) Application number: 24884655.2
(22) Date of filing: 28.10.2024
(51) Int. Cl.: H04L 51/02

(54) **INTERACTION METHOD AND APPARATUS, DEVICE, AND STORAGE MEDIUM**

(30) Priority: 30.10.2023 CN 202311425772
(71) Applicant: Beijing Zitiao Network Technology Co., Ltd., Beijing 100190 (CN)
(72) Inventor: ZHOU, Zijun, Beijing 100028 (CN)
(74) Representative: Grünecker Patent- und Rechtsanwälte PartG mbB
(86) International application number: PCT/CN2024/127736
(87) International publication number: WO 2025/092652

(57) **Abstract**

Embodiments of the disclosure relate to a method, an apparatus, a device and a storage medium for interaction. The method presented herein includes: presenting a session interface of a target session, the target session including at least a target user object and a set of virtual objects, the set of virtual objects being added to the target session based on an addition operation of a user object associated with the target session; receiving a first message input by the target user object, the first message being associated with at least one virtual object of the set of virtual objects; and presenting, in the session interface, a second message from the at least one virtual object as a reply to the first message.

## Description

This application claims the priority of Chinese Patent Application No. 202311425772.5, filed on Oct. 30, 2023, entitled "METHOD, APPARATUS, DEVICE AND STORAGE MEDIUM FOR NTERACTION", the entire content of which is incorporated herein by reference.

### FIELD

Example embodiments of the present disclosure generally relate to the field of computers, and in particular, to a method, an apparatus, a device, and a computer-readable storage medium for interaction.

### BACKGROUND

With the development of computer technologies, the Internet has become an important platform for information interaction. For example, a user may interact with other users, such as through an instant messaging service. The user may, for example, establish a session with other contacts. However, such session interactions are limited only between user objects, which results in such sessions failing to provide other desired content for the user.

### SUMMARY

In a first aspect of the present disclosure, an interaction method is provided. The method includes: presenting a session interface of a target session, the target session including at least a target user object and a set of virtual objects, the set of virtual objects being added to the target session based on an addition operation of a user object associated with the target session; receiving a first message input by the target user object, the first message being associated with at least one virtual object of the set of virtual objects; and presenting, in the session interface, a second message from the at least one virtual object as a reply to the first message.

In a second aspect of the present disclosure, an interaction apparatus is provided. The apparatus includes: a presenting module, configured to present a session interface of a target session, the target session including at least a target user object and a set of virtual objects, the set of virtual objects being added to the target session based on an addition operation of a user object associated with the target session; a receiving module, configured to receive a first message input by the target user object, the first message being associated with at least one virtual object of the set of virtual objects; and a presenting module configured to present, in the session interface, a second message from the at least one virtual object as a reply to the first message.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the electronic device to perform the method of the first aspect or the second aspect.

In a fourth aspect of the present disclosure, a computer-readable storage medium is provided. The computer-readable storage medium stores a computer program thereon. The computer program is executable by a processor to implement the method of the first aspect or the second aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments according to the present disclosure may be implemented;
FIG. 2A-FIG. 2E illustrate example interfaces according to some embodiments of the present disclosure;
FIG. 3A- FIG.3F illustrate example interfaces according to further embodiments of the present disclosure;
FIG. 4 illustrates a flowchart of an example interaction process according to some embodiments of the present disclosure;
FIG. 5 illustrates a schematic structural block diagram of an interaction apparatus according to some embodiments of the present disclosure; and
FIG. 6 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined with any other embodiment described in the same section/subsection and/or different sections/subsections in any manner.

In the description of the embodiments of the present disclosure, the terms "comprising/including" and its equivalents should be construed as being open-ended inclusive, i.e., "including, but not limited to". The term "based on" should be construed as "based at least in part on". The terms "one embodiment" or "the embodiment" should be construed as "at least one embodiment". The term "some embodiments" should be understood as "at least some embodiments". Other definitions, either explicit or implicit, may also be included below. The terms "first," "second," and the like may refer to different or identical objects. Other explicit and implicit definitions may also be included below.

Embodiments of the present disclosure may relate to data of a user, acquisition and/or use of data, and the like. These aspects all comply with the corresponding laws and regulations and related provisions. In the embodiments of the present disclosure, all data is collected, obtained, processed, processed, forwarded, used, etc., all of which are performed on the premise that the user knows and confirms. Accordingly, when implementing the embodiments of the present disclosure, the user should be informed of the types, use ranges, use scenarios, and the like of the data or information that probably involved in an appropriate manner according to relevant laws and regulations and the user's authorization may be acquired. The specific notification and/or authorization manner may vary according to actual situations and application scenarios, and the scope of the present disclosure is not limited in this respect.

The solutions in the present specification and the embodiments, if personal information processing is involved, may be processed on the premise of having a legality basis (for example, obtaining consent of a personal information subject, or necessary for performing a fulfillment contract), and shall be processed only within a specified or agreed range. The user rejecting personal information other than necessary information required for the basic function would not affect the basic function of the user.

Message interaction is an important interaction behavior on the Internet, and people can create a session through, for example, an instant messaging service, and implement message sending and receiving. The user may, for example, establish a session with other contacts. However, such session interactions are limited only between user objects, which results in such sessions failing to provide other desired content for the user.

The embodiments of the present disclosure provide an interaction solution. According to the solution, a session interface of a target session may be presented. The target session includes at least a target user object and a set of virtual objects. The set of virtual objects are added to the target session based on an addition operation of a user object associated with the target session. A first message input by the target user object is received. The first message is associated with at least one virtual object of the set of virtual objects; and a second message from the at least one virtual object is presented in the session interface as a reply to the first message.

In this way, embodiments of the present disclosure can support a user to add a virtual object capable of natural language interaction into a session, and the user can interact with the virtual object in a message interaction manner, thereby improving a message interaction experience of the session.

Various example implementations of the solution are described in detail below in conjunction with the accompanying drawings.

### Example Environment

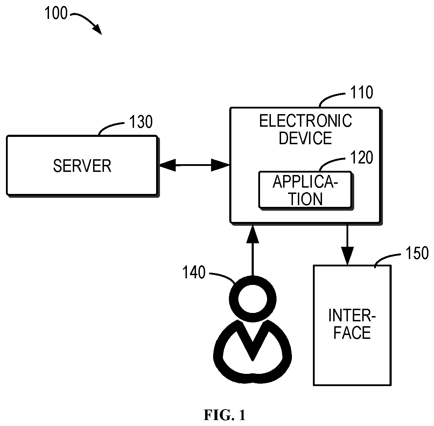

FIG. 1 illustrates a schematic diagram of an example environment 100 in which embodiments of the present disclosure can be implemented. As shown in FIG. 1, the example environment 100 may include an electronic device 110.

In this example environment 100, the electronic device 110 may run an application 120 that supports interface interaction. The application 120 may be any suitable type of application for interface interaction, examples of which may include, but are not limited to, instant messaging applications, video applications, social interaction applications, or other applications that provide services of dialoging with particular objects. The user 140 may interact with the application 120 via the electronic device 110 and/or its attachment device.

In the environment 100 of FIG. 1, if the application 120 is active, the electronic device 110 may present, through the application 120, an interface 150 for supporting interface interaction.

In some embodiments, the electronic device 110 communicates with the server 130 to enable provisioning of services to the application 120. The electronic device 110 may be any type of mobile terminals, fixed terminals, or portable terminals, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a Personal Digital Assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 110 can also support any type of interface for a user (such as a "wearable" circuit, etc.).

The server 130 may be an independent physical server, may also be a server cluster or a distributed system formed by a plurality of physical servers, and it may also be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, etc. The server 130 may provide background services for applications 120 that support a virtual scene presentation in the electronic device 110.

A communication connection may be established between the server 130 and the electronic device 110. The communication connection may be established in a wired manner or a wireless manner. Communication connections may include, but are not limited to, Bluetooth connections, mobile network connections, Universal Serial Bus connections (USB), Wireless Fidelity (WiFi) connections, etc., embodiments of the present disclosure are not limited in this respect. In an embodiment of the present disclosure, the server 130 and the electronic device 110 may implement signaling interaction through a communication connection between the server 130 and the electronic device 110.

It should be understood that the structures and functions of the various elements in environment 100 are described for illustrative purposes only and do not imply any limitation to the scope of the present disclosure.

Some example embodiments of the present disclosure will be described below with continued reference to the accompanying drawings.

### Add a virtual object to a session

Hereinafter, an example process according to an embodiment of the present disclosure will be described with reference to the accompanying drawings.

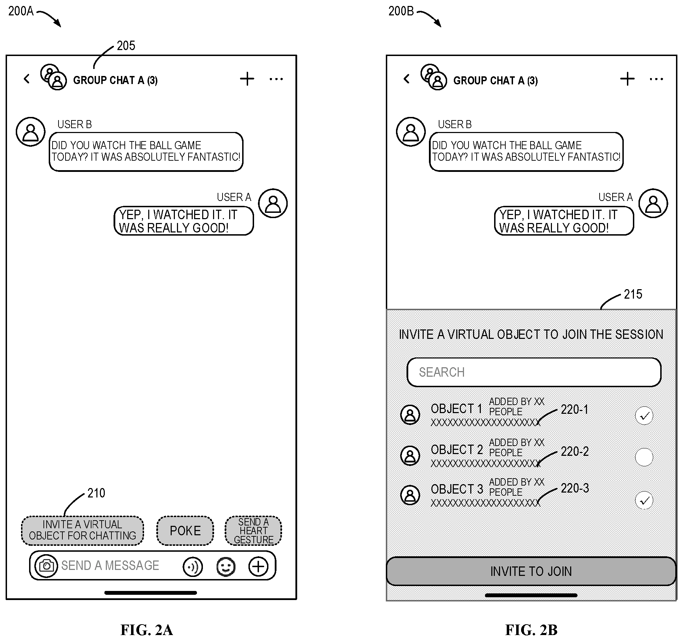

FIG. 2A illustrates an example interface according to some embodiments of the present disclosure. As shown in FIG. 2A, interface 200A may be a session interface of session 205 (e.g., group chat A).

It should be understood that although the following figures take group chat as an example of a session, such a session may also include, for example, a single session (e.g., a session between two members). Alternatively, such a session may also include a group chat session of one or more members. For example, some group chat sessions remain only one member or two members for reasons such as initial creation or group membership quit. The interface shown in FIG. 2A may be provided, for example, by a terminal device of a user object (for example, "user A") in the session 205.

As shown in FIG. 2A, in interface 200A, electronic device 110 may provide an addition entry 210 for adding one or more virtual objects to session 205.

For example, upon receiving the selection for the addition entry 210, electronic device 110 may present interface 200B as shown in FIG. 2B. As shown in FIG. 2B, in the interface 200B, electronic device 110 may present a set of candidate virtual objects. For example, the electronic device 110 may display, in an addition panel 215, a candidate virtual object 220-1, a candidate virtual object 220-2, a candidate virtual object 220-3 (either individually or collectively as the candidate virtual object 220 or a set of candidate virtual objects 220) that may be added to the session 205.

In some embodiments, such a set of virtual candidate virtual objects 220 may be, for example, one or more candidate virtual objects in a candidate virtual object set that can be added to the session in the platform. The candidate virtual objects may be provided by a platform or created by a user.

As an example, the electronic device 110 may further provide a search control in the addition panel 215 to support the user to input a keyword to search for a candidate virtual object matching the keyword from a candidate virtual object set.

In some embodiments, the electronic device 110 may, for example, present its relevant description information in association with the candidate virtual object 220. As shown in FIG. 2B, description information of the candidate virtual object 220 may be presented in the addition panel. Such description information may include, for example, identification information of the candidate virtual object 220. Such identification information may include a text identification, for example, the name of the candidate virtual object 220. Or the identification information may also include an image representation, for example, a profile photo of the candidate virtual object 220.

Additionally, such description information may also include summary information. The summary information may be related to, for example, a summary content of the candidate virtual object 220, e.g., a brief introduction of the candidate virtual object 220.

In some embodiments, such description information may also include addition information of candidate virtual objects 220. The addition information may, for example, indicate the number of times that a candidate virtual object is added to the session. For example, as shown in FIG. 2B, electronic device 110 may display "Object 1" is "added by XX people".

In some examples, the plurality of candidate virtual objects 220 may be sorted accordingly, for example, according to their addition information.

In this way, embodiments of the present disclosure may help a user locate a virtual object of interest faster. In addition, the embodiments of the present disclosure may further recommend virtual objects that meet expectations to the user by displaying the attention degree (for example, the number of times of addition) of each virtual object.

In some embodiments, the candidate virtual object 220 may be implemented, for example, based on a language model, which may be trained, for example, based on training data associated with a relevant topic, enabling such candidate virtual objects 220 to support natural language interaction. In some scenarios, such candidate virtual objects 220 may also be referred to as digital people, digital assistants, and so on.

For example, the candidate virtual object 220-1 to the candidate virtual object 220-3 may be trained based on training data associated with different topics, such that different candidate virtual objects 220 have different aspects of language processing capabilities. It may be understood that the training data of one topic may be a text corpus or the like associated with a predetermined virtual object.

In some embodiments, the electronic device 110 may also support, for example, the user initiating the request to add the virtual object in other appropriate manners. For example, a user may initiate a request to add a virtual object through a member management interface of session 205.

As an example, the electronic device 110 may, for example, receive a selection for the candidate virtual object 220-1 and the candidate virtual object 220-3, and may add the candidate virtual object 220-1 and the candidate virtual object 220-3 into the session 205 by clicking the invitation button (e.g., an "Invite to Join" button) below.

In some embodiments, an upper limit of the virtual object that may be included in a session may also be set for each session. As an example, each session may, for example, add up to 3 virtual objects. In this case, if the number of candidate virtual objects selected by the user through the addition panel 215 does not exceed the maximum number that can still be added to the current session, the "Invite to Join" button may, for example, be in an interactive state.

Conversely, if the number of candidate virtual objects selected by the user through the addition panel 215 exceeds the maximum number that can further to be added to the current session, the "Invite to Join" button may, for example, be in a disabled state and, for example, may remind "A maximum of X more virtual objects can still be added".

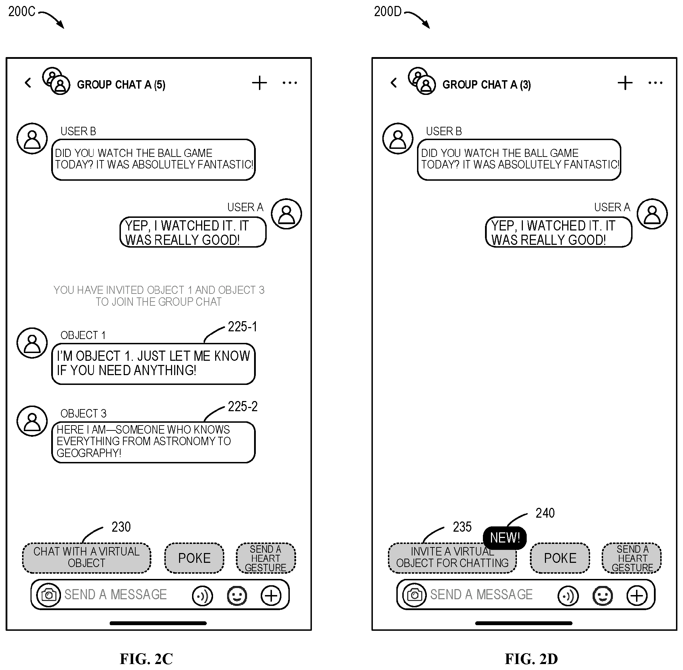

Further, after candidate virtual object 220-1 (e.g., object 1) and candidate virtual object 220-3 (e.g., object 3) are added to the session 205, electronic device 110 may present interface 200C as shown in FIG. 2C.

As shown in FIG. 2C, electronic device 110 may present a reminder in interface 200C related to that candidate virtual object 220-1 (e.g., object 1) and candidate virtual object 220-3 (e.g., object 3) have been added to the session 205.

Additionally, electronic device 110 may also present at least one message in interface 200C from the added candidate virtual object 220-1 (e.g., object 1) and the candidate virtual object 220-3 (e.g., object 3), e.g., message 225-1 and message 225-2.

Such messages 225 -1 and message 225 -2 may be messages for greeting, for example, different virtual objects may be associated with different greeting messages, for example. Correspondingly, a greeting message may be determined from a greeting message set relevant to the virtual objects, to be sent to the session 205. In this way, different virtual objects, for example, may provide different styles of session messages, thereby improving the experience of message interaction.

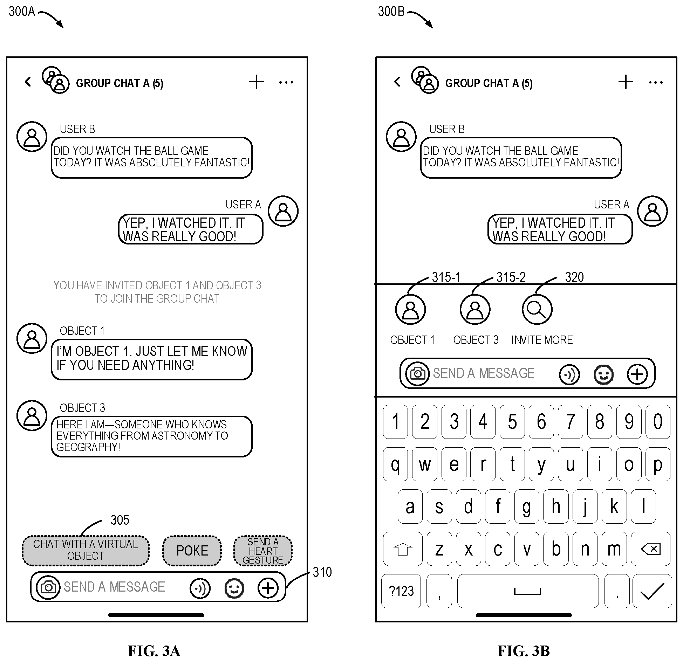

In some embodiments, as shown in FIG. 2C, in the case where one or more virtual objects have been added to the session 205, the electronic device 110 may update the addition entry 210 to the interaction entry 230 to support interaction between the user and the added virtual object. Detailed processes regarding interaction will be described in detail below with reference to FIG. 3A- FIG. 3F.

In some embodiments, as shown in FIG. 2D, the electronic device 110 may also present an indicator 240 regarding the update in association with an addition entry 235 based on the update of the candidate virtual object set that can be added to the session 205. For example, if the number of newly added candidate virtual objects in the candidate virtual object set exceeds a threshold, electronic device 110 may present indicator 240 in association with the addition entry 235.

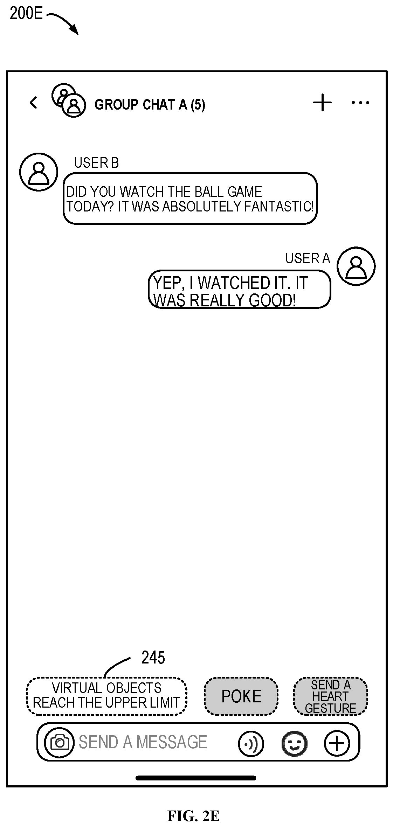

In still other embodiments, as shown in FIG. 2E, after the at least one candidate virtual object is added to the session 205, if the number of added virtual objects in the session reaches the upper limit, the electronic device 110 may, for example, adjust the addition entry 210 to a reminder element 245 as shown in FIG. 2E, so as to present a reminder that the virtual object not being able to be added.

Based on the processes described above, embodiments of the present disclosure can support a user adding one or more virtual objects to a session to support initiating interaction with a virtual object in the session. Therefore, the embodiments of the present disclosure can enrich the interaction type of the session and improve the participation degree of the user for the session.

### Interaction with virtual objects in a session

A process of interaction with virtual objects according to an embodiment of the present disclosure will be further described below with reference to FIG. 3A- FIG. 3F.

FIG. 3A illustrates an example interface in accordance with some embodiments of the present disclosure. As shown in FIG. 3A, the interface 300A may be a session interface of a session (e.g., group chat A). For example, such a session may include, for example, at least one user object and at least one virtual object.

As described above with reference to FIG. 2A-FIG. 2E,such at least one virtual object may be added to the session, for example, based on an addition operation of a user object associated with the session.

For example, a session as shown in FIG. 3A may include two virtual objects, for example, "object 1" and "object 3". It should be understood that such virtual objects may be added by the current user (e.g., user A) or by other appropriate session participants (e.g., user B).

For example, the interface 300A may be provided by, for example, a terminal device of the user A.

As shown in FIG. 3A, the interface 300A may include, for example, an input control 310 to support a user interacting with other members in the session by inputting information such as text, images, voice, and emoji.

In some embodiments, the interface 300A may include an interaction entry 305. Such an interaction entry 305 may be for, for example, initiating interaction with virtual objects in the session.

As an example, the electronic device 110 may display the interface 300B as shown in FIG. 3B in the case where the selection related to the interaction entry 305 is received. As shown in FIG. 3B, electronic device 110 may present a set of virtual objects that have been added to the session, e.g., virtual object 315-1 (e.g., object 1) and virtual object 315-2 (e.g., object 3).

Additionally, the electronic device 110 may also present an addition entry 230, for example. in the case where a selection related to addition entry 230 is received, electronic device 110 may, for example, correspondingly present addition panel 215 as discussed with reference to FIG. 2B to add a new virtual object into the session.

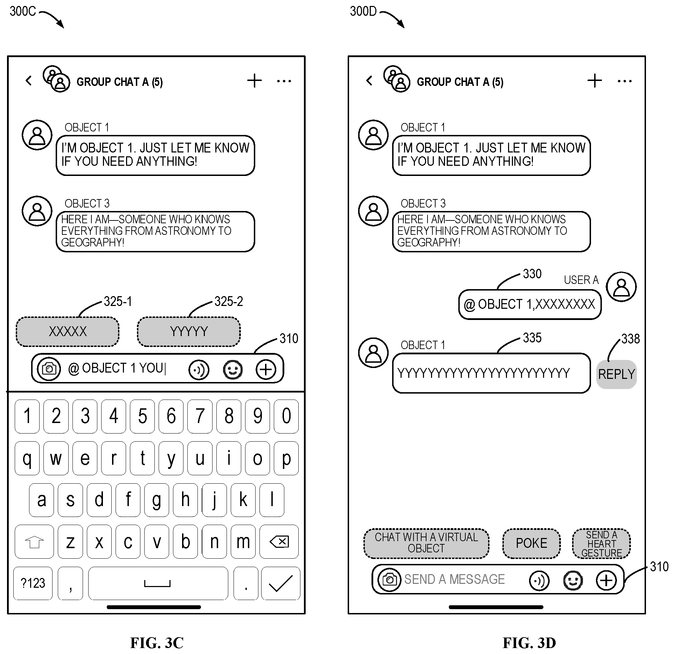

As an example, in the case where a selection for virtual object 315 -1 is received, electronic device 110 may present interface 300C as shown in FIG. 3C. As shown in FIG. 3C, in the interface 300C, the electronic device 110 may present, in input control 310, reference information for the selected at least one virtual object. For example, based on the selection for virtual object 315-1, electronic device 110 may automatically populate reference information (e.g., "@ object 1") in input control 310 to indicate that the message currently input by the user is associated with the selected virtual object 315 -1.

Further, the electronic device 110 may receive the content input via the input control 310 by the user. Correspondingly, in the case where the sending instruction is received, as shown in FIG. 3D, the electronic device 110 may display, in the session interface of the session, the first message 330 determined based on the reference information and the target content input by the user.

In some embodiments, the electronic device 110 may also support user initiating interaction with the virtual objects in other manners.

For example, taking FIG. 3A as an example, the electronic device 110 may receive a predetermined operation of the user on the identification information of the at least one virtual object (for example, the "object 1" or the "object 3"), so that the relevant reference information is automatically populated in the input control 310. For example, in the case where a long-press operation by the user on the profile image of "object 1" is received, electronic device 110 may display interface 300C as shown in FIG. 3C, where input control 310 may be automatically populated with reference information, e.g., "@ object 1". Similarly, the electronic device 110 may further obtain the first message 330 from "User A" via the input control 310.

In some further embodiments, the electronic device 110 may also receive reference information input by the user using the input control 310 directly. As an example, the user may, for example, directly input "@ object 1" to indicate that the message to be input is associated with virtual object 315-1. In some embodiments, after the user input the predetermined character in the input control 310, the electronic device 11 presents a set of virtual objects that have been added to the session and other target objects in the session, thereby giving the user a selection operation to determine the associated virtual object.

In other embodiments, such reference information may have other suitable formats or content forms, for example. For example, if the first message 330 input by the user includes a content portion associated with the virtual object 315 -1 (i.e., reference information), the first message 330 may be determined to be associated with the virtual object 315 -1.

For example, the virtual object 315 -1 may be associated with a predetermined identification or the user may configure the identification of such a virtual object 315 -1. correspondingly, if such a first message 330 contains such an identification, the first message 330 may be determined to be related to the virtual object 315-1. That is, the first message 330 indicates that the user interacts with the virtual object 315 -1.

In some embodiments, as shown in FIG. 3C, in the case where a virtual control 310 includes reference information (e.g., "@ object 1") related to a particular virtual object (e.g., virtual object 315-1), electronic device 110 may also present a set of candidate input items, e.g., candidate input item 325 -1 and candidate input item 325 -2, in association with input control 310.

Further, based on the selection for the target input item (e.g., the candidate input item 325 -1) in the set of candidate input items (e.g., the candidate input item 325 -1 and the candidate input item 325 -2, alone or collectively as the candidate input item 325), the electronic device 110 may automatically add, in the input control 310, the target content relevant to the target input item, thereby realizing the quick input of the message.

In some embodiments, such candidate input items 325 may be relevant to virtual objects indicated by reference information. That is, the reference information for different virtual objects in the input control 310 may, for example, trigger presentation of different candidate input items.

In some embodiments, such candidate input items 325 may include one or more predetermined input items relevant to corresponding virtual objects. For example, a set of input items may be configured in association with each virtual object, and the electronic device 110 may randomly present one or more of the input items therein as candidate input items. Optionally, in the case where the user authorization is sufficiently obtained, the candidate input item associated with the virtual object indicated by the reference information may be updated in real time based on the input of the user in the input control 310.

In still other embodiments, such candidate input items 325 may further include recommendation input items determined based on the interaction information of the corresponding virtual objects. For example, interaction messages between different users and the virtual object may be clustered, so as to determine a message that is more frequently input by the user as a recommendation input item.

In this way, embodiments of the present disclosure may improve efficiency of interaction between a user and a virtual object.

Further, as shown in FIG. 3D, after the first message 330 from "User A" is sent into the session, the electronic device 110 may also correspondingly present, in the interface 300D, a second message 335 from at least one virtual object (e.g., object 1) associated with the first message 330 as a reply to the first message 330. For example, the second message 335 may include reference information of a reply object, for example, "@ user A".

In this way, embodiments of the present disclosure can support a user to conveniently initiate interaction with virtual objects in various types of sessions, thereby improving efficiency of information interaction.

In some embodiments, the electronic device 110 may also present a reply entry 338 for replying to the second message 335 in association with the second message 335 from the virtual object 315-1. Correspondingly, after the selection for reply entry 338 is received, electronic device 110 may, for example, present reference information (e.g., "@ object 1") for virtual object 315 in input control 310 of interface 300D.

Therefore, embodiments of the present disclosure may support a user in multi-round dialogue interaction with virtual objects in a session, thereby improving depth of information interaction.

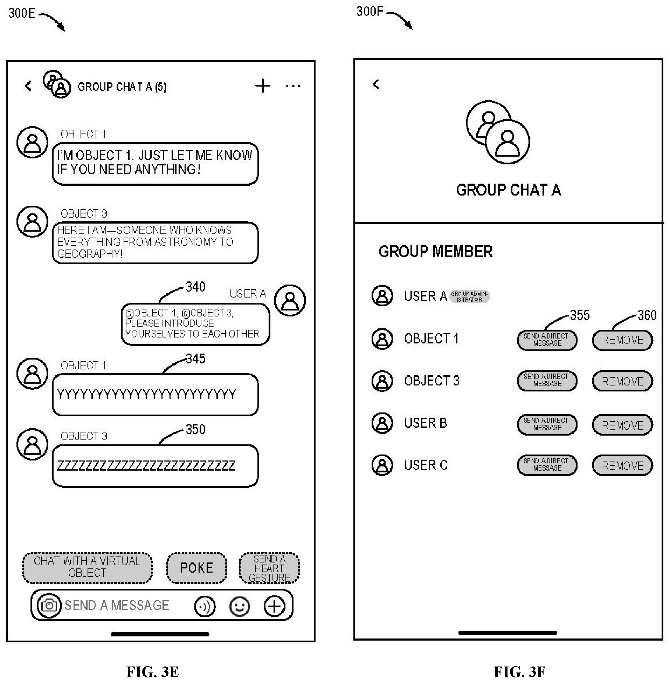

In some embodiments, as shown in FIG. 3E, the first message 340 from "User A" may also be associated with multiple virtual objects, for example. For example, the first message 340 may simultaneously mention the virtual object 315 -1 ("object 1") and the virtual object 315 -2 ("object 3").

Correspondingly, the plurality of virtual objects 315 -1 and the virtual object 315 -3 may both respond to the first message and send the message 345 and the message 350 correspondingly.

In some embodiments, such a first message 340 may also indicate, for example, that multiple virtual objects perform an interaction related to a target topic in a session. Taking FIG. 3E as an example, the first message 340 may, for example, indicate that the virtual object 315-1 ("object 1") and the virtual object 315-2 ("object 3") perform an interaction related the topic of "introduction to each other".

In this case, message 345 from virtual object 315 -1 and message 350 from virtual object 315 -2 may both be associated with a target topic indicated in first message 340. For example, message 345 and message 350 may be self-introduction content.

In some embodiments, the message 345 from the virtual object 315 -1 may also be related to another virtual object 315 -2 mentioned in the first message 340. Similarly, the message 350 from the virtual object 315-2 may also be related to another virtual object 315 -1 mentioned in the first message 340. For example, the message 350 and the message 340 may include the reference information of the other party.

For example, the message 345 related to self-introduction of the virtual object 315-1 may, for example, be based on one or more characteristics of another virtual object 315-2. For example, such a message 345 may include content such as "Unlike your expertise in XX, I am more proficient in YY.".

In this way, the embodiments of the present disclosure may not only support the quick interaction between the user object and the virtual object in the session, but also support interaction between different virtual objects, thereby improving the richness of the session.

In some embodiments, the electronic device 110 may also present the interface 300F (which is also referred to as a viewing interface) as shown in FIG. 3F based on the viewing request of the user. As shown in FIG. 3F, the interface 300F may present one or more virtual objects already added to the session, e.g., "object 1" and "object 3".

Further, the electronic device 110 may also present one or more interaction entries associated with the virtual object. In some embodiments, if the current user has predetermined rights (e.g., session management rights) associated with the current session, the electronic device 110 may present the removal entry 355 associated with the virtual object. Correspondingly, if selection for removal entry 355 is received, electronic device 110 may correspondingly remove the relevant virtual object, e.g., "object 1", from the session.

In some embodiments, the interaction entry provided by the electronic device 110 may include, for example, an entry for directing to a viewing interface of a corresponding virtual object. For example, such an interaction entry may be associated with a profile image or name of a virtual object. The user may jump to the personal homepage of the virtual object, for example, by clicking on the profile image or name of the virtual object.

In some embodiments, the interaction entry provided by the electronic device 110 may include an entry 355 for directing to a session interface with a corresponding virtual object. The user may initiate a direct chat session with the virtual object, for example, by clicking on the entry 355.

In this way, embodiments of the present disclosure enable more efficient management of virtual objects in a session.

### Example Message Generation Process

A scenario in which a user interacts with virtual objects in a session is described below with reference to FIG. 3A- FIG. 3F. The generation mechanism of the message from the virtual object will be further described below.

Taking FIG. 3D as an example, in the case where the first message 330 from the user is obtained, the electronic device 110 may obtain a second message generated based on the first message. It should be understood that the second message may be generated based on the first message by any suitable electronic device (including but not limited to the electronic device 110 or an appropriate remote device). For convenience of description, such an electronic device may be referred to as a generation device.

For example, the electronic device 110 may provide the first message to a generation device (for example, the electronic device 110, a server, or a relevant interface device) associated with the virtual object 315-1 (i.e., the object 1), to obtain a second message generated by the generation device based on the first message.

In some embodiments, when generating the second message, the generation device may also consider a set of interaction messages between the user (for example, user A) and the virtual object 315-1. Such a set of interaction messages may include, for example, a previous interaction message between the user and the virtual object 315-1.

As an example, the generation device may maintain a session between the user and the virtual object 315-1, and after receiving the first message 330, the generation device may synthetically generate the second message 335 based on the existing message in the session and the first message 330, as a reply.

In some embodiments, the set of interaction messages considered by the generation device when generating the second message 335 may include: an interaction message between the user and the virtual object 335 -1 within a target period before the first message 330.

In some examples, such a target period may be a predetermined period. For example, the generation device may clear existing messages in the session according to a predetermined time period, so that the generation device considers only the interaction message within the latest time period. In this way, the embodiments of the present disclosure can reduce the storage pressure of the generation device and improve the information management efficiency.

In some embodiments, such a target period may also be determined based on a configuration operation of a user object, for example. For example, the user may configure a range of other interaction messages that the corresponding virtual object can be based on when performing message interaction.

In still other embodiments, considering that there may be different user objects in the session to interact with the same virtual object, the generation device relevant to the virtual object may, for example, maintain an independent session for each user, so that the generation of the second message 335 may be independent of an interaction message between other user objects other than the target user object and the virtual object.

Therefore, the embodiments of the present disclosure can improve the independence of interaction between different users and the virtual object, thereby improving the reliability of session interaction in the multi-user session.

In some embodiments, the electronic device 110 may further provide, for example, the second context message to the generation device, so that the generation device further generates the second message 335 based on the second context message. The second context message includes, for example, a second set of interaction messages in the session before the first message 330.

In some embodiments, in the case where the related user knows and explicit permission of the related user is obtained in the session, the electronic device 110 may also provide a predetermined number of messages before the first message 330 to the generation device. Such a predetermined number of messages may include, but are not limited to, interaction messages between the user objects, interaction messages between the current user object and the current virtual object, interaction messages between the current user object and other virtual objects, interaction messages between other user objects and the virtual objects, and the like.

In this way, embodiments of the present disclosure can provide the generation device with context information associated with the first message 330, thereby helping the generation device to generate the second message 335 with a higher quality, thereby improving the efficiency of message interaction.

### Example Process

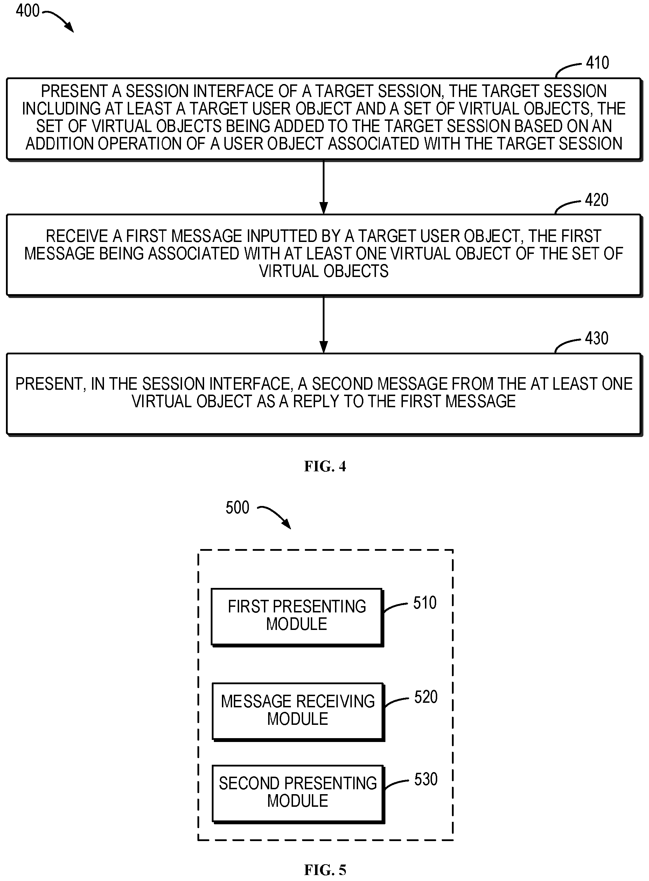

FIG. 4 illustrates a flowchart of an example process 400 for content viewing according to some embodiments of the present disclosure. Process 400 may be implemented at electronic device 110. The process 400 is described below with reference to FIG. 1.

As shown in FIG. 4, at block 410, the electronic device 110 presents a session interface of a target session, The target session includes at least a target user object and a set of virtual objects. The set of virtual objects are added to the target session based on an addition operation of a user object associated with the target session.

At block 420, the electronic device 110 receives a first message input by the target user object. The first message is associated with at least one virtual object of the set of virtual objects.

At block 430, the electronic device 110 presents, in the session interface, a second message from the at least one virtual object as a reply to the first message.

In some embodiments, the first message includes reference information related to the at least one virtual object.

In some embodiments, receiving the first message input by the target user object includes: presenting, based on a selection for an interaction entry in the session interface, the set of virtual objects in the target session; presenting, based on a selection for the at least one virtual object in the set of virtual objects, first reference information for the at least one virtual object in an input control in the session interface; and obtaining the first message via the input control, the first message including the first reference information.

In some embodiments, the process 400 further includes: presenting, based on a selection for an interaction entry in the session interface and in association with the set of virtual objects, a first addition entry for adding a virtual object to the target session.

In some embodiments, receiving the first message input by the target user object includes: receiving a predetermined operation of the target user object with respect to identification information of the at least one virtual object; presenting, in an input control of the target session, second reference information for the at least one virtual object; and obtaining the first message via the input control, the first message including the second reference information.

In some embodiments, receiving the first message input by the target user object includes: presenting, in accordance with that the reference information related to the at least one virtual object is included in an input control of the session interface, a set of candidate input items in association with the input control; adding, based on a selection for a target input item in the set of candidate input items, target content corresponding to the target input item in the input control; and obtaining the first message via the input control, the first message being generated based on at least the reference information and the target content.

In some embodiments, the set of candidate input items includes at least one input item corresponding to the at least one virtual object, the at least one input item including: a predetermined input item, or a recommendation input item determined based on interaction information of the at least one virtual object.

In some embodiments, the process 400 further includes: presenting, in association with the second message, a reply entry for replying to the second message, where the second message is from a target virtual object in the at least one virtual object; and presenting, based on a selection for the reply entry, third reference information for the target virtual object in an input control of the session interface.

In some embodiments, the process 400 further includes: presenting, based on a request to add a virtual object to the target session, a set of candidate virtual objects; and adding, based on a selection for at least one candidate virtual object in the set of candidate virtual objects the at least one candidate virtual object to the target session.

In some embodiments, process 400 further includes: receiving, based on a selection for a second addition entry in the session interface, a request to add a virtual object to the target session.

In some embodiments, process 400 further includes: presenting, based on an update of the set of candidate virtual objects, an indicator related to the update in association with the second addition entry, the set of candidate virtual objects including a plurality of candidate virtual objects that are able to be added to the target session.

In some embodiments, the process 400 further includes: adjusting, after the at least one candidate virtual object is added to the target session and in response to the number of virtual objects that are added in the target session reaching a first threshold, the addition entry to present a reminder related to a virtual object not being able to be added.

In some embodiments, presenting the set of candidate virtual objects includes: presenting description information of the set of candidate virtual objects, where the description information includes at least one of: identification information of a candidate virtual object, the identification information including a text representation and/or an image representation; summary information of a candidate virtual object, the summary information including summary content related to the virtual object; addition information of a candidate virtual object, the addition information indicating the number of times that the candidate virtual object is added to a session.

In some embodiments, adding the at least one candidate virtual object to the target session includes: adding, in response to the number of the at least one candidate virtual object being less than a second threshold, the at least one candidate virtual object to the target session.

In some embodiments, the process 400 further includes: presenting, in response to the at least one candidate virtual object being added to the target session, at least one message from the at least one candidate virtual object in a session interface of the target session.

In some embodiments, the process 400 further includes: obtaining the second message generated based on the first message and a first context message, the first context message including a first set of interaction messages between the target user object and the at least one virtual object.

In some embodiments, the process 400 further includes: obtaining the second message generated based on the first message, a first context message, and a second context message, the second context message including a second set of interaction messages in the target session before the first message.

In some embodiments, the first set of interaction messages is: an interaction message between the target user object and the at least one virtual object within a target period before the first message.

In some embodiments, the target period is a predetermined period, or where the target time period is determined based on a configuration operation of the target user object.

In some embodiments, a generation of the second message is independent of an interaction message between other user objects than the target user object and the at least one virtual object in the target session.

In some embodiments, the process 400 further includes: presenting a viewing interface based on a viewing request of the target user object, the viewing interface presenting the set of virtual objects in the target session; and presenting, in association with the set of virtual objects, an interaction entry associated with a corresponding virtual object.

In some embodiments, presenting in association with the set of virtual objects the interaction entry associated with the corresponding virtual object includes: presenting, in response to the target user object having a predetermined permission associated with the target session, a removal entry associated with the corresponding virtual object; and removing, in response to receiving a selection for the removal entry, the corresponding virtual object from the target session.

In some embodiments, the interaction entry includes at least one of: a first interaction entry configured to direct to a viewing interface of the corresponding virtual object; a second interaction entry configured to direct to a session interface of the corresponding virtual object.

In some embodiments, the first message is for indicating that a plurality of virtual objects in the set of virtual objects perform an interaction related to a target topic in the target session.

In some embodiments, the second message includes a plurality of messages from the plurality of virtual objects and the plurality of messages are associated with the target topic.

In some embodiments, the plurality of virtual objects includes at least a first virtual object and a second virtual object, and the second message from the first virtual object is further associated with at least the second virtual object.

In some embodiments, the set of virtual objects is trained based on training data associated with a relevant topic to support natural language interaction.

### Example Apparatus and Device

Embodiments of the present disclosure also provide a corresponding apparatus for implementing the above method or process. FIG. 5 illustrates a schematic structural block diagram of an interaction apparatus 500 according to some embodiments of the present disclosure. The apparatus 500 may be implemented as electronic device 110 or included in the electronic device 110. The respective modules/components in the apparatus 500 may be implemented by hardware, software, firmware, or any combination thereof.

As shown in FIG. 5, the apparatus 500 includes: a first presenting module 510, configured to present a session interface of a target session, the target session including at least a target user object and a set of virtual objects, the set of virtual objects being added to the target session based on an addition operation of a user object associated with the target session; a receiving module 520, configured to receive a first message input by the target user object, the first message being associated with at least one virtual object of the set of virtual objects; and a second presenting module 530 configured to present, in the session interface, a second message from the at least one virtual object as a reply to the first message.

In some embodiments, the first message includes reference information related to the at least one virtual object.

In some embodiments, the receiving module 520 is further configured to: present, based on a selection for an interaction entry in the session interface, the set of virtual objects in the target session; present, based on a selection for the at least one virtual object in the set of virtual objects, first reference information for the at least one virtual object in an input control in the session interface; and obtain the first message via the input control, the first message including the first reference information.

In some embodiments, the presenting module 530 is further configured to: present, based on a selection for an interaction entry in the session interface and in association with the set of virtual objects, a first addition entry for adding a virtual object to the target session.

In some embodiments, the receiving module 520 is further configured to: receive a predetermined operation of the target user object with respect to identification information of the at least one virtual object; present, in an input control of the target session, second reference information for the at least one virtual object; and obtain the first message via the input control, the first message including the second reference information.

In some embodiments, the receiving module 520 is further configured to: present, in accordance with that the reference information related to the at least one virtual object is included in an input control of the session interface, a set of candidate input items in association with the input control; add, based on a selection for a target input item in the set of candidate input items, target content corresponding to the target input item in the input control; and obtain the first message via the input control, the first message being generated based on at least the reference information and the target content.

In some embodiments, the set of candidate input items includes at least one input item corresponding to the at least one virtual object, the at least one input item including: a predetermined input item, or a recommendation input item determined based on interaction information of the at least one virtual object.

In some embodiments, the apparatus 500 further includes a third presenting module configured to: present, in association with the second message, a reply entry for replying to the second message, where the second message is from a target virtual object in the at least one virtual object; and present, based on a selection for the reply entry, third reference information for the target virtual object in an input control of the session interface.

In some embodiments, the apparatus 500 further includes a fourth presenting module configured to: present, based on a request to add a virtual object to the target session, a set of candidate virtual objects; and add, based on a selection for at least one candidate virtual object in the set of candidate virtual objects the at least one candidate virtual object to the target session.

In some embodiments, the apparatus 500 further includes an addition module configured to: receive, based on a selection for a second addition entry in the session interface, a request to add a virtual object to the target session.

In some embodiments, the addition module is further configured to: present, based on an update of the set of candidate virtual objects, an indicator related to the update in association with the second addition entry, the set of candidate virtual objects including a plurality of candidate virtual objects that are able to be added to the target session.

In some embodiments, the addition module is further configured to: adjust, after the at least one candidate virtual object is added to the target session and in response to the number of virtual objects that are added in the target session reaching a first threshold, the addition entry to present a reminder related to a virtual object not being able to be added.

In some embodiments, the addition module is further configured to: present description information of the set of candidate virtual objects, where the description information includes at least one of: identification information of a candidate virtual object, the identification information including a text representation and/or an image representation; summary information of a candidate virtual object, the summary information including summary content related to the virtual object; addition information of a candidate virtual object, the addition information indicating the number of times that the candidate virtual object is added to a session.

In some embodiments, the addition module is further configured to: add, in response to the number of the at least one candidate virtual object being less than a second threshold, the at least one candidate virtual object to the target session.

In some embodiments, the addition module is further configured to: present, in response to the at least one candidate virtual object being added to the target session, at least one message from the at least one candidate virtual object in a session interface of the target session.

In some embodiments, the apparatus 500 further includes a processing module configured to: obtain the second message generated based on the first message and a first context message, the first context message including a first set of interaction messages between the target user object and the at least one virtual object.

In some embodiments, the processing module is further configured to: obtain the second message generated based on the first message, a first context message, and a second context message, the second context message including a second set of interaction messages in the target session before the first message.

In some embodiments, the first set of interaction messages is: an interaction message between the target user object and the at least one virtual object within a target period before the first message.

In some embodiments, the target period is a predetermined period, or where the target time period is determined based on a configuration operation of the target user object.

In some embodiments, a generation of the second message is independent of an interaction message between other user objects than the target user object and the at least one virtual object in the target session.

In some embodiments, the apparatus 500 further includes a fifth presenting module configured to: present a viewing interface based on a viewing request of the target user object, the viewing interface presenting the set of virtual objects in the target session; and present, in association with the set of virtual objects, an interaction entry associated with a corresponding virtual object.

In some embodiments, the apparatus 500 further includes a removal module configured to: present, in response to the target user object having a predetermined permission associated with the target session, a removal entry associated with the corresponding virtual object; and remove, in response to receiving a selection for the removal entry, the corresponding virtual object from the target session.

In some embodiments, the interaction entry includes at least one of: a first interaction entry configured to direct to a viewing interface of the corresponding virtual object; a second interaction entry configured to direct to a session interface of the corresponding virtual object.

In some embodiments, the first message is for indicating that a plurality of virtual objects in the set of virtual objects perform an interaction related to a target topic in the target session.

In some embodiments, the second message includes a plurality of messages from the plurality of virtual objects and the plurality of messages are associated with the target topic.

In some embodiments, the plurality of virtual objects includes at least a first virtual object and a second virtual object, and the second message from the first virtual object is further associated with at least the second virtual object.

In some embodiments, the set of virtual objects is trained based on training data associated with a relevant topic to support natural language interaction.

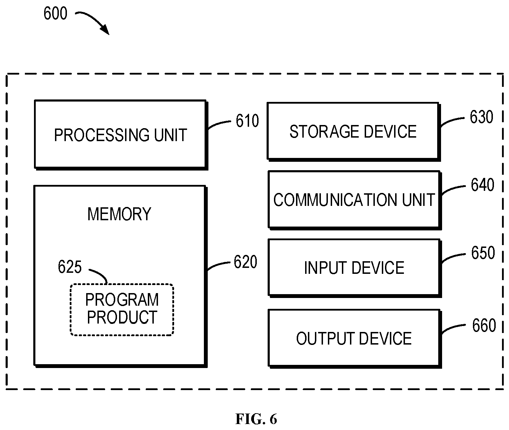

FIG. 6 illustrates a block diagram of an electronic device 600 capable of implementing one or more embodiments of the present disclosure. It should be understood that the electronic device 600 shown in FIG. 6 is merely for example and should not constitute any limitation on the function and scope of the embodiments described herein. The electronic device 600 shown in FIG. 6 may be configured to implement the electronic device 110 of FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In multiprocessor systems, multiple processing units execute computer-executable instructions in parallel to improve parallel processing capabilities of electronic device 600.

The electronic device 600 typically includes a plurality of computer storage media. Such media may be any available media accessible by the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device630 may be a removable or non-removable medium and may include a machine-readable medium, such as a flash drive, magnetic disk, or any other medium, which may be capable of storing information and/or data and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communications unit 640 implements communications with other electronic devices over a communications medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc., communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/acts specified in the flowchart and/or block(s) in block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block(s) in block diagram.

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions/acts specified in the flowchart and/or block(s) in block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical application, or improvements to the technology in the marketplace, or to enable others of ordinary skill in the art to understand the various implementations disclosed herein.

## Claims

1. An interaction method, comprising:
presenting a session interface of a target session, the target session comprising at least a target user object and a set of virtual objects, the set of virtual objects being added to the target session based on an addition operation of a user object associated with the target session;
receiving a first message input by the target user object, the first message being associated with at least one virtual object of the set of virtual objects; and
presenting, in the session interface, a second message from the at least one virtual object as a reply to the first message.

2. The method of claim 1, wherein the first message comprises reference information related to the at least one virtual object.

3. The method of claim 2, wherein receiving the first message input by the target user object comprises:
presenting, based on a selection for an interaction entry in the session interface, the set of virtual objects in the target session;
presenting, based on a selection for the at least one virtual object in the set of virtual objects, first reference information for the at least one virtual object in an input control in the session interface; and
obtaining the first message via the input control, the first message comprising the first reference information.

4. The method of claim 2, further comprising:
presenting, based on a selection for an interaction entry in the session interface and in association with the set of virtual objects, a first addition entry for adding a virtual object to the target session.

5. The method of claim 2, wherein receiving the first message input by the target user object comprises:
receiving a predetermined operation of the target user object with respect to identification information of the at least one virtual object;
presenting, in an input control of the target session, second reference information for the at least one virtual object; and
obtaining the first message via the input control, the first message comprising the second reference information.

6. The method of claim 2, wherein receiving the first message input by the target user object comprises:
presenting, in accordance with that the reference information related to the at least one virtual object is comprised in an input control of the session interface, a set of candidate input items in association with the input control;
adding, based on a selection for a target input item in the set of candidate input items, target content corresponding to the target input item in the input control; and
obtaining the first message via the input control, the first message being generated based on at least the reference information and the target content.

7. The method of claim 6, wherein the set of candidate input items comprises at least one input item corresponding to the at least one virtual object, the at least one input item comprising: a predetermined input item, or a recommendation input item determined based on interaction information of the at least one virtual object.

8. The method of claim 1, further comprising:
presenting, in association with the second message, a reply entry for replying to the second message, wherein the second message is from a target virtual object in the at least one virtual object; and
presenting, based on a selection for the reply entry, third reference information for the target virtual object in an input control of the session interface.

9. The method of claim 1, further comprising:
presenting, based on a request to add a virtual object to the target session, a set of candidate virtual objects; and
adding, based on a selection for at least one candidate virtual object in the set of candidate virtual objects the at least one candidate virtual object to the target session.

10. The method of claim 9, further comprising:
receiving, based on a selection for a second addition entry in the session interface, a request to add a virtual object to the target session.

11. The method of claim 10, further comprising:
presenting, based on an update of the set of candidate virtual objects, an indicator related to the update in association with the second addition entry, the set of candidate virtual objects comprising a plurality of candidate virtual objects that are able to be added to the target session.

12. The method of claim 10, further comprising:
adjusting, after the at least one candidate virtual object is added to the target session and in response to the number of virtual objects that are added in the target session reaching a first threshold, the addition entry to present a reminder related to a virtual object not being able to be added.

13. The method of claim 9, wherein presenting the set of candidate virtual objects comprises: presenting description information of the set of candidate virtual objects, wherein the description information comprises at least one of:
identification information of a candidate virtual object, the identification information comprising a text representation and/or an image representation;
summary information of a candidate virtual object, the summary information comprising summary content related to the virtual object;
addition information of a candidate virtual object, the addition information indicating the number of times that the candidate virtual object is added to a session.

14. The method of claim 9, wherein adding the at least one candidate virtual object to the target session comprises:
adding, in response to the number of the at least one candidate virtual object being less than a second threshold, the at least one candidate virtual object to the target session.

15. The method of claim 9, further comprising:
presenting, in response to the at least one candidate virtual object being added to the target session, at least one message from the at least one candidate virtual object in a session interface of the target session.

16. The method of claim 1, further comprising:
obtaining the second message generated based on the first message and a first context message, the first context message comprising a first set of interaction messages between the target user object and the at least one virtual object.

17. The method of claim 16, further comprising:
obtaining the second message generated based on the first message, a first context message, and a second context message, the second context message comprising a second set of interaction messages in the target session before the first message.

18. The method of claim 16, wherein the first set of interaction messages is: an interaction message between the target user object and the at least one virtual object within a target period before the first message.

19. The method of claim 18, wherein the target period is a predetermined period, or
wherein the target period is determined based on a configuration operation of the target user object.

20. The method of claim 16, wherein a generation of the second message is independent of an interaction message between other user objects than the target user object and the at least one virtual object in the target session.

21. The method of claim 1, further comprising:
presenting a viewing interface based on a viewing request of the target user object, the viewing interface presenting the set of virtual objects in the target session; and
presenting, in association with the set of virtual objects, an interaction entry associated with a corresponding virtual object.

22. The method of claim 21, wherein presenting in association with the set of virtual objects the interaction entry associated with the corresponding virtual object comprises:
presenting, in response to the target user object having a predetermined permission associated with the target session, a removal entry associated with the corresponding virtual object; and
removing, in response to receiving a selection for the removal entry, the corresponding virtual object from the target session.

23. The method of claim 21, wherein the interaction entry comprises at least one of:
a first interaction entry configured to direct to a viewing interface of the corresponding virtual object;
a second interaction entry configured to direct to a session interface of the corresponding virtual object.

24. The method of claim 1, wherein the first message is for indicating that a plurality of virtual objects in the set of virtual objects perform an interaction related to a target topic in the target session.

25. The method of claim 24, wherein the second message comprises a plurality of messages from the plurality of virtual objects and the plurality of messages are associated with the target topic.

26. The method of claim 25, wherein the plurality of virtual objects comprises at least a first virtual object and a second virtual object, and the second message from the first virtual object is further associated with at least the second virtual object.

27. The method of claim 1, wherein the set of virtual objects is trained based on training data associated with a relevant topic to support natural language interaction.

28. An interaction apparatus, comprising:
a first presenting module, configured to present a session interface of a target session, the target session comprising at least a target user object and a set of virtual objects, the set of virtual objects being added to the target session based on an addition operation of a user object associated with the target session;
a message receiving module, configured to receive a first message input by the target user object, the first message being associated with at least one virtual object of the set of virtual objects; and
a second presenting module configured to present, in the session interface, a second message from the at least one virtual object as a reply to the first message.

29. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-27.

30. A computer-readable storage medium storing a computer program thereon, the computer program being executable by a processor to implement the method of any of claims 1-27.
